# EUROPÄISCHE PATENTSCHRIFT

(11) **EP 0 634 602 B1**
(45) Veröffentlichungstag und Bekanntmachung des Hinweises auf die Patenterteilung: **27.11.1996**
(21) Anmeldenummer: 94110323.6
(22) Anmeldetag: 02.07.1994
(51) Int. Cl.: F16L 59/02, F16L 59/14

(54) **Wärmeisoliertes Leitungsrohr**
Thermally insulated pipe
Tuyau isolé thermiquement

(30) Priorität: 15.07.1993 DE 9310530 U
(43) Veröffentlichungstag der Anmeldung: 18.01.1995
(73) Patentinhaber: BRUGG Rohrsysteme GmbH, D-31515 Wunstorf (DE)
(72) Erfinder: Friessner, Jürgen, Dipl.-Ing., D-30900 Wedemark (DE); Schnell, Urs, CH-5242 Lupfig (CH)

(56) Entgegenhaltungen:
- DE-A- 2 905 250
- GB-A- 1 306 831
- GB-A- 2 136 528
- US-A- 4 139 024

## Beschreibung

Die Erfindung betrifft ein wärmeisoliertes Leitungsrohr nach dem Oberbegriff des Anspruches 1.

Aus der DE 33 07 120 A1 ist ein Fernwärmeleitungsrohr bekannt, welches aus einem mediumführenden Innenrohr, einem Außenrohr und einer zwischen dem Innenrohr und dem Außenrohr befindlichen Wärmeisolationsschicht aus aufgeschäumtem Polyurethan besteht. Das Innenrohr besteht aus einem vernetzten Kunststoff und weist z. B. an seiner äußeren Oberfläche eine metallische Lage auf, um zu verhindern, daß Wasserdampf in die Polyurethanschaumstoffschicht eindringt. Darüberhinaus verhindert die Metallfolie den Austritt des zellbildenden Gases. Aus diesen Gründen ist auch das Außenrohr z. B. an seiner inneren Oberfläche mit einer Metallfolie versehen.

Beide Metallfolien sind sowohl mit den angrenzenden Rohren - Innenrohr bzw. Außenrohr - als auch mit der Polyurethanschaumstoffschicht durch Verklebung verbunden. Bei dieser bekannten Rohrkonstruktion handelt es sich um ein sogenanntes Verbundrohrsystem, d. h. eine Dehnung des Innenrohres z. B. infolge einer Erwärmung beim Durchfluß von Heizwasser bzw. Heizdampf wird weitestgehend verhindert bzw. führt zu einer Dehnung des gesamten Verbundrohres. Wenn es sich um Polyurethanschaum handelt, der mit fluorierten Kohlenwasserstoffen getrieben ist, bleibt der Verbund über einen sehr langen Zeitraum aufrechterhalten.

Fluorierte Kohlenwasserstoffe stehen in dem Verdacht, daß sie die den Erdball umgebende Ozonschicht zerstören und dürfen in Zukunft nicht mehr eingesetzt werden.

Als Ersatzwerkstoff für fluorierte Kohlenwasserstoffe werden teilhalogenierte Kohlenwasserstoffe, Kohlendioxid und andere Materialien verwendet. Die mit diesen Materialien getriebenen Schaumstoffe haben jedoch schlechtere Isoliereigenschaften und die Isolierschicht muß, um gleiche Dämmwerte zu erreichen, dicker ausgestaltet werden. Ein wesentlicher Nachteil dieser Schaumstoffe besteht jedoch darin, daß die Zellgase relativ schnell aus den Zellen austritt mit der Folge, daß der Schaumstoff im Laufe der Zeit schrumpft. Bei Verwendung eines z. B. CO₂-getriebenen Schaumes bei einem Fernwärmeleitungsrohr der eingangs erwähnten Art würde dieses relativ schnell seinen Charakter als Verbundrohrsystem verlieren.

Der Erfindung liegt daher die Aufgabe zugrunde, das bekannte Fernwärmerohr dahingehend zu verbessern, daß auf einen Schaumstoff, der mit fluoriertem Kohlenwasserstoff getrieben wird, verzichtet wird und dennoch ein Verbund zwischen Innenrohr, Schaum und Außenrohr auch über einen längeren Zeitraum aufrechterhalten bleibt.

Diese Aufgabe wird durch die im Kennzeichen des Anspruches 1 erfaßten Merkmale gelöst.

Weitere vorteilhafte Ausgestaltungen sind in den Unteransprüchen erfaßt.

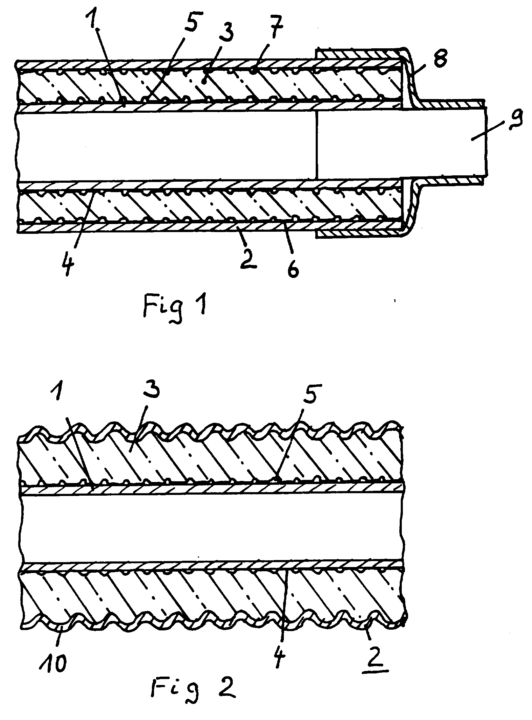

Die Erfindung ist anhand der in den Figuren 1 und 2 schematisch dargestellten Ausführungsbeispiele näher erläutert.

Das in der Figur 1 dargestellte wärmeisolierte Leitungsrohr besteht aus dem mediumführenden Innenrohr 1, dem konzentrisch dazu angeordneten Außenrohr 2 sowie einer den Ringspalt zwischen den Rohren 1 und 2 ausfüllenden Isolierschicht 3.

Das Innenrohr 1 ist ein Kunststoffrohr, vorzugsweise aus vernetztem Polyethylen. Auch das Außenrohr 2 besteht aus Kunststoff, vorzugsweise ebenfalls aus Polyethylen. Die Isolierschicht besteht aus Polyurethanschaum, der mit Kohlendioxid als Treibmittel hergestellt ist. Alternativ können unter der Bezeichnung H-FCKW 1426 und H-FCKW 1416 erhältliche Treibmittel verwendet werden, die als nahezu unbedenklich eingestuft werden. Auf dem Innenrohr 1 befindet sich ein Metallband 4, z. B. ein Aluminiumband, welches mit dem Innenrohr 1 verklebt ist. Das Metallband 4 ist entweder längseinlaufend aufgebracht, d. h. mit in Längsrichtung des Innenrohres 1 verlaufender Naht, oder wendelförmig auf das Innenrohr 1 aufgewickelt. Das Metallband 4 weist eine Vielzahl von Noppen 5 auf. Diese Noppen 5 dringen in die Schaumstoffschicht 3 ein und bewirken eine Verklammerung des Innenrohres 1 mit der Schaumstoffschicht.

Mit der inneren Oberfläche des Außenrohres 2 ist ein weiteres Metallband 6 verklebt, welches ebenfalls Noppen 7 aufweist, die jedoch nach innen ragen und eine mechanische Veklammerung des Außenrohres 2 mit der Schaumstoffschicht erreichen sollen. Dieses Metallband 6, welches vorzugsweise ebenfalls ein Aluminiumband sein sollte, ist aus verfahrenstechnischen Gründen längseinlaufend aufgebracht.

Die Metallbänder 4 und 6 haben neben der Aufgabe der mechanischen Verklammerung noch den Zweck, eine Diffusion von Wasserdampf bzw. Sauerstoff durch die Wandung des Innenrohres 1 und des Außenrohres 2 zu verhindern.

Darüberhinaus soll ein Ausdiffundieren des Treibmittels Kohlendioxid weitestgehend unterbunden werden. Zu diesem Zweck ist der Ringraum an den Enden jeder Rohrlänge abgedichtet. Hierzu dient zweckmäßigerweise eine Schrumpfmanschette 8, die mit einer nicht näher bezeichneten Aluminiumfolie verbunden ist. Die in Bandform vorliegende Manschette wird um das Rohrende herumgelegt und mittels einer flexiblen Schiene an ihren Längsrändern verschlossen. Beim Erwärmen schrumpft die Manschette 8 auf den Umfang des Außenrohres 2 und den Umfang des Innenrohres 1, wenn dieses aus dem Rohrende herausragt. Bei einer glatten Abtrennung muß ein Stopfen 9 in das Innenrohr 1 eingesetzt werden, auf welchen die Manschette 8 aufschrumpft. Da solche Manschetten 8 an ihrer inneren Oberfläche mit einer Heißschmelzkleberschicht versehen sind, ergibt sich somit ein feuchtigkeitsdichter Abschluß, der aufgrund der Aluminiumfolie in der Manschette 8 auch eine Diffusion von Gasen ausschließt.

Das in der Figur 2 dargestellte Ausführungsbeispiel unterscheidet sich von dem Ausführungsbeispiel nach Figur 1 darin, daß als Außenmantel ein gewelltes Kunststoffrohr 10 verwendet wird. Das äußere Metallband ist hier aus Gründen der Herstellung nicht einsetzbar. Bei dieser Ausgestaltung wird eine Diffusion durch die Wandung des Außenrohres 10 in Kauf genommen.

Beiden Lösungen ist gemeinsam, daß ein Verbund zwischen dem Innenrohr 1 und dem Außenrohr 2 bzw. 10 vorhanden ist, da das Innenrohr 1 über die Verklebung des Metallbandes 4, die Noppen 5, die Schaumstoffschicht 3, die Noppen 7, die Verklebung des Metallbandes 6 mit dem Außenrohr 2 formschlüssig verbunden ist. Im Falle der Figur 2 erfolgt die Verklammerung des Kunststoffwellrohres 10 mit der Schaumstoffschicht 3 über die Wellung des Rohres 10. Wesentlich ist jedoch, daß die Höhe der Noppen 5 bzw. 7 sowie die Welltiefe so bemessen sind, daß auch nach einer Schrumpfung der Schaumstoffschicht 3 der mechanische Verbund erhalten bleibt.

Zusätzlich zu dem Metallband 4 kann auf das Innenrohr 1 noch eine nicht dargestellte an sich bekannte Armierung aufgebracht sein. So kann beispielsweise auf das Innenrohr 1 eine glatte Aluminiumfolie aufgewickelt sein, auf welche eine Armierungslage aus z. B. einem Netzband, kreuzweise aufgewickelten Kordeln, Fäden, Bändern etc., aufgebracht werden kann, die eine Längung des Innenrohres bei Erwärmung und Druckbeaufschlagung verhindert. Die Funktionen Diffusionsabdichtung und mechanische Halterung sind hier getrennt. Die Armierung sollte aber auch bei dieser Ausgestaltung so beschaffen sein, daß eine mechanische Verklammerung von Innenrohr 1 und Schaumstoffschicht 3 auch nach dem Schrumpfen der Schaumstoffschicht 3 erhalten bleibt.

## Patentansprüche

1. Wärmeisoliertes Leitungsrohr, bestehend aus einem Innenrohr aus Kunststoff, einem im Abstand dazu konzentrisch angeordneten Außenrohr und einer den Ringraum zwischen dem Innenrohr und dem Außenrohr ausfüllenden Isolierschicht aus aufgeschäumtem Kunststoff auf der Basis von Polyurethan, gekennzeichnet durch folgende Merkmale:
a) die Isolierschicht (3) besteht aus CO₂-getriebenem oder einem mit teilhalogeniertem Kohlenwasserstoff getriebenen Polyurethanschaum,
b) das Innenrohr (1) ist an seiner äußeren Oberfläche derart strukturiert, daß eine mechanische Verklammerung mit der Isolierschicht (3) auftritt und
c) das Außenrohr ist ein gewelltes Rohr (10), dessen Wellung durch die Isolierschicht (3) zumindest teilweise ausgefüllt ist oder ein glattes Kunststoffrohr (2), dessen innere Oberfläche strukturiert ist, so daß eine mechanische Verklammerung mit der Isolierschicht (3) auftritt.

2. Wärmeisoliertes Leitungsrohr nach Anspruch 1, dadurch gekennzeichnet, daß das Außenrohr ein gewelltes Kunststoffrohr (10) ist.

3. Wärmeisoliertes Leitungsrohr nach Anspruch 1 oder 2, dadurch gekennzeichnet, daß das Innenrohr (1) ein gewelltes Kunststoffrohr ist.

4. Wärmeisoliertes Leitungsrohr nach einem der Ansprüche 1 bis 3, dadurch gekennzeichnet, daß das Innenrohr (1) an seiner äußeren Oberfläche aufgerauht ist.

5. Wärmeisoliertes Leitungsrohr nach einem der Ansprüche 1 bis 4, dadurch gekennzeichnet, daß in die Oberfläche des Innenrohres (1) in Umfangsrichtung oder wendelförmig verlaufende Rillen eingeformt sind.

6. Wärmeisoliertes Leitungsrohr nach einem der Ansprüche 1 bis 5, dadurch gekennzeichnet, daß auf das Innenrohr (1) eine oder mehrere Lagen eines strangförmigen Gutes, wie z. B. ein Band (4), eine Kordel, aufgewickelt sind.

7. Wärmeisoliertes Leitungsrohr nach Anspruch 6, dadurch gekennzeichnet, daß zwei Lagen kreuzweise aufgewickelt sind.

8. Wärmeisoliertes Leitungsrohr nach einem der Ansprüche 1 bis 7, dadurch gekennzeichnet, daß ein Band (4) mit nach außen gerichteten Erhebungen (5), z.B. ein Noppenband, auf das Innenrohr (1) aufgewickelt ist.

9. Wärmeisoliertes Leitungsrohr nach einem der Ansprüche 6 bis 8, dadurch gekennzeichnet, daß die Lagen des strangförmigen Gutes bzw. des Bandes (4) mit der äußeren Oberfläche des Innenrohres (1) verklebt sind.

10. Wärmeisoliertes Leitungsrohr nach einem der Ansprüche 1 bis 9, dadurch gekennzeichnet, daß auf das Innenrohr (1) eine oder mehrere Folien (4) aus gegenüber Sauerstoff und/oder Kohlendioxid und/oder Wasserdampf diffusionsdichtem Material aufgebracht sind.

11. Wärmeisoliertes Leitungsrohr nach einem der Ansprüche 1 bis 10, dadurch gekennzeichnet, daß auf das Innenrohr (1) eine oder mehrere in Umfangsrichtung wendelförmig bzw. mit wechselnder Richtung verlaufende Profilierungen aus thermoplastischem Material aufextrudiert sind.

12. Wärmeisoliertes Leitungsrohr nach Anspruch 11, dadurch gekennzeichnet, daß die Profilierung Streifen aus Heißschmelzkleber sind, die mit wechselnder Richtung aufgebracht sind.

13. Wärmeisoliertes Leitungsrohr nach Anspruch 6 oder einem der folgenden, dadurch gekennzeichnet, daß das Innenrohr (1) mit einer oder mehreren Lagen Kunststoffband bewickelt ist, welches durch in Längsrichtung des Bandes verlaufende Stränge aus Glasfasern oder einem ähnlichen zugfesten Material verstärkt ist.

14. Wärmeisoliertes Leitungsrohr nach einem der Ansprüche 1 bis 13, dadurch gekennzeichnet, daß das Innenrohr (1) aus vernetztem Polyethylen besteht.

15. Wärmeisoliertes Leitungsrohr nach einem der Ansprüche 1 bis 14, dadurch gekennzeichnet, daß die Isolierschicht (3) von einer Folie (6) umgeben ist, die sowohl mit der Isolierschicht (3) als auch mit dem Außenrohr (2) verklebt ist.

16. Wärmeisoliertes Leitungsrohr nach einem der Ansprüche 1 bis 15, dadurch gekennzeichnet, daß zwischen der Isolierschicht (3) und dem Kunststoffaußenrohr (2) eine Metallfolie (6) vorgesehen ist, die mit nach innen ragenden Noppen (7) versehen ist und mit dem Außenrohr (2) verklebt ist.

17. Wärmeisoliertes Leitungsrohr nach einem der Ansprüche 1 bis 16, dadurch gekennzeichnet, daß der Ringraum zwischen dem Innenrohr (1) und dem Außenrohr (2) durch eine wärmegeschrumpfte, auf dem Außenrohr (2) und dem Innenrohr (1) bzw. einem das Innenrohr (1) verlängerndem Element (9) aufliegenden Manschette (8) mit einer metallischen Einlage abgedichtet ist.

## Claims

1. Heat-insulated line pipe, comprising an inner pipe of plastic, an outer pipe arranged concentrically at a distance therefrom and an insulating layer of foamed plastic, based on polyurethane, filling the annular space between the inner pipe and the outer pipe, characterized by the following features:
a) the insulating layer (3) consists of CO₂-blown polyurethane foam or a polyurethane foam blown with partly halogenated hydrocarbon,
b) the inner pipe (1) is textured on its outer surface in such a way that a mechanical interlocking with the insulating layer (3) occurs and
c) the outer pipe is a corrugated pipe (10), the corrugation of which is at least partially filled by the insulating layer (3) or a smooth plastic pipe (2), the inner surface of which is textured, so that a mechanical interlocking with the insulating layer (3) occurs.

2. Heat-insulated line pipe according to Claim 1, characterized in that the outer pipe is a corrugated plastic pipe (10).

3. Heat-insulated line pipe according to Claim 1 or 2, characterized in that the inner pipe (1) is a corrugated plastic pipe.

4. Heat-insulated line pipe according to one of Claims 1 to 3, characterized in that the inner pipe (1) is roughened on its outer surface.

5. Heat-insulated line pipe according to one of Claims 1 to 4, characterized in that grooves running in the circumferential direction or helically are formed in the surface of the inner pipe (1).

6. Heat-insulated line pipe according to one of Claims 1 to 5, characterized in that one or more layers of a material in strand form, such as for example a tape (4), a cord, are wound up onto the inner pipe (1).

7. Heat-insulated line pipe according to Claim 6, characterized in that two layers are wound up crosswise.

8. Heat-insulated line pipe according to one of Claims 1 to 7, characterized in that a tape (4) having outwardly directed elevations (5), for example a studded tape, is wound up onto the inner pipe (1).

9. Heat-insulated line pipe according to one of Claims 6 to 8, characterized in that the layers of the material in strand form or tape (4) are adhesively bonded to the outer surface of the inner pipe (1).

10. Heat-insulated line pipe according to one of Claims 1 to 9, characterized in that one or more films (4) made of material which is diffusion-resistant to oxygen and/or carbon dioxide and/or water vapour are applied to the inner pipe (1).

11. Heat-insulated line pipe according to one of Claims 1 to 10, characterized in that one or more profilings of thermoplastic material, running in the circumferential direction helically or with alternating direction, are extruded onto the inner pipe (1).

12. Heat-insulated line pipe according to Claim 11, characterized in that the profiling comprises strips of hot-melt adhesive which are applied with alternating direction.

13. Heat-insulated line pipe according to Claim 6 or one of the following claims, characterized in that the inner pipe (1) is wound with one or more layers of plastic tape which is reinforced by strands of glass fibres or a similar tension-resistant material running in the longitudinal direction of the tape.

14. Heat-insulated line pipe according to one of Claims 1 to 13, characterized in that the inner pipe (1) consists of crosslinked polyethylene.

15. Heat-insulated line pipe according to one of Claims 1 to 14, characterized in that the insulating layer (3) is surrounded by a film (6) which is adhesively bonded both to the insulating layer (3) and to the outer pipe (2).

16. Heat-insulated line pipe according to one of Claims 1 to 15, characterized in that there is provided between the insulating layer (3) and the plastic outer pipe (2) a metal foil (6) which is provided with inwardly protruding studs (7) and is adhesively bonded to the outer pipe (2).

17. Heat-insulated line pipe according to one of Claims 1 to 16, characterized in that the annular space between the inner pipe (1) and the outer pipe (2) is sealed off by a heat-shrunk sleeve (8), having a metallic insert, resting on the outer pipe (2) and the inner pipe (1) or an element (9) extending the inner pipe (1).

## Revendications

1. Conduite calorifuge composée d'un tube interne en plastique, d'un tube externe disposé concentriquement par rapport à celui-ci et d'une couche isolante en plastique expansé sur base polyuréthanne remplissant l'espace annulaire situé entre le tube interne et le tube externe, caractérisée en ce que :
a) la couche isolante (3) se compose de mousse rigide de polyuréthanne gonflée au CO2 ou d'une mousse de polyuréthanne gonflée au carbure d'hydrogène partiellement halogéné,
b) le tube interne (1) est structuré sur sa face externe de telle sorte qu'un cramponnage mécanique se produit avec la couche isolante (3) et en ce que
c) le tube externe est un tube ondulé (10) dont l'ondulation est remplie du moins partiellement par la couche isolante (3) ou un tube de plastique lisse (2) et dont la face interne est structurée de telle sorte qu'un cramponnage mécanique se produit avec la couche isolante (3).

2. Conduite calorifuge selon la revendication 1, caractérisée en ce que le tube externe est un tube en plastique ondulé (10).

3. Conduite calorifuge selon la revendication 1 ou 2, caractérisée en ce que le tube interne (1) est un tube en plastique ondulé.

4. Conduite calorifuge selon une des revendications 1 à 3, caractérisée en ce que le tube interne (1) est rugueux sur sa face externe.

5. Conduite calorifuge selon une des revendications 1 à 4, caractérisée en ce que des rainures disposées circonférentiellement ou hélicoïdalement sont creusées à la surface du tube interne (1).

6. Conduite calorifuge selon une des revendications 1 à 5, caractérisée en ce qu'une ou plusieurs couches d'un matériau linéaire, par exemple une bande (4) ou une corde, sont enroulées sur le tube interne (1).

7. Conduite calorifuge selon la revendication 6, caractérisée en ce que deux couches sont entrecroisées.

8. Conduite calorifuge selon une des revendications 1 à 7, caractérisée en ce qu'une bande (4) présentant des renflements (5) en saillie, p. ex. une bande à noeuds, est enroulée sur le tube interne (1).

9. Conduite calorifuge selon une des revendications 6 à 8, caractérisée en ce que les couches du matériau linéaire ou de la bande (4) sont collées à la face externe du tube interne (1).

10. Conduite calorifuge selon une des revendications 1 à 9, caractérisée en ce qu'un ou plusieurs films (4) faits d'un matériau ne laissant pas passer l'oxygène et/ou le dioxyde de carbone et/ou la vapeur d'eau sont appliqués sur le tube interne (1).

11. Conduite calorifuge selon une des revendications 1 à 10, caractérisée en ce qu'un ou plusieurs profilés sont extrudés à partir d'un matériau thermoplastique sur le tube interne (1), en étant disposés circonférentiellement, hélicoïdalement ou avec une alternance de sens.

12. Conduite calorifuge selon la revendication 11, caractérisée en ce que le profilé est constitué de lanières en colle à matières fondues qui sont disposés avec une alternance de sens.

13. Conduite calorifuge selon la revendication 6 ou une des suivantes, caractérisée en ce que le tube interne (1) est enveloppé d'une ou plusieurs couches de bande plastique qui est renforcée par des fils en fibre de verre ou en un matériau similaire résistant à la traction placés dans le sens longitudinal de la bande.

14. Conduite calorifuge selon une des revendications 1 à 13, caractérisée en ce que le tube interne (1) se compose de polyéthylène réticulé.

15. Conduite calorifuge selon une des revendications 1 à 14, caractérisée en ce que la couche isolante (3) est entourée d'un film (6) qui est collé non seulement à la couche isolante (3), mais aussi au tube externe (2).

16. Conduite calorifuge selon une des revendications 1 à 15, caractérisée en ce qu'un film métallique à noeuds en creux (7) collé au tube externe (2) est prévu entre la couche isolante (3) et le tube externe en plastique (2).

17. Conduite calorifuge selon une des revendications 1 à 16, caractérisée en ce que l'espace annulaire situé entre le tube interne (1) et le tube externe (2) est étanché par une manchette (8) à raccord métallique, rétrécie thermiquement, posée sur le tube externe (2) et le tube interne (1) ou un élément (9) allongeant le tube interne (1).
